# FASCICULE DE BREVET EUROPEEN

(11) **EP 1 147 940 B1**
(45) Date de publication et mention de la délivrance du brevet: **09.01.2008**
(21) Numéro de dépôt: 01401011.0
(22) Date de dépôt: 19.04.2001
(51) Int. Cl.: B60Q 1/04

(54) **Projecteur pour un véhicule automobile destiné à être placé dans une zone du véhicule exposée aux chocs**
In möglichem Aufprallbereich montierter Kraftfahrzeugscheinwerfer
Vehicle headlamp mounted in potential impact region

(30) Priorité: 21.04.2000 FR 0005196
(43) Date de publication de la demande: 24.10.2001
(73) Titulaire: Peugeot Citroen Automobiles SA, 92200 Neuilly sur Seine (FR)
(72) Inventeur: Coulombier, Donat Rémy Aimé, 91440 Bures sur Yvette (FR)
(74) Mandataire: Bouget, Lucien

(56) Documents cités:
- EP-A- 1 048 895
- FR-A- 2 789 028

## Description

L'invention concerne un projecteur pour un véhicule automobile destiné à être placé dans une zone du véhicule exposée aux chocs.

Les véhicules automobiles comportent généralement des projecteurs situés dans des zones du véhicule qui sont exposées aux chocs, par exemple un pare-chocs du véhicule ou encore une partie de la carrosserie située au-dessus du pare-chocs.

Un projecteur pour véhicule automobile comporte généralement un boîtier renfermant un réflecteur, au moins une lampe de signalisation ou d'éclairage et les organes électriques du projecteur ainsi qu'une glace généralement translucide fermant une extrémité du boîtier et assurant le passage de la lumière réfléchie par le réflecteur.

Dans les véhicules de conception récente, la glace du projecteur peut être réalisée et montée de manière à suivre la courbure de la carrosserie, pour s'étendre sur une longueur importante vers l'arrière de la carrosserie.

Le boîtier du projecteur est généralement fixé sur la carrosserie par l'intermédiaire d'éléments de fixation tels que des pattes.

Lorsque le projecteur subit un choc, une force de compression s'exerce sur le projecteur sous l'effet du choc, ce qui peut provoquer la rupture des éléments de fixation du projecteur et son recul vers l'arrière du véhicule. A l'issue du choc, non seulement le projecteur mais encore les éléments situés derrière le projecteur peuvent être endommagés ou détruits.

On a donc proposé des projecteurs qui comportent des éléments de fixation dits fusibles qui peuvent se rompre sous l'effet du choc, un espace libre étant prévu derrière le boîtier du projecteur, afin de permettre son recul dans le cas de petits chocs, sans que les éléments placés derrière le projecteur à une certaine distance et la plupart des éléments constitutifs du projecteur ne soient détériorés. Dans le cas de chocs plus importants, cependant, le projecteur et les éléments situés derrière le projecteur ne peuveut être épargnés.

Le document EP-A-1 048 895 qui correspond au preambule de la revendication 1 montre un projecteur pour véhicule automobile destiné à être placé dans une zone du véhicule exposée aux chocs et comportant un boîtier fixé sur une partie de carrosserie du véhicule automobile et une glace solidaire du boîtier. En outre ce document montre une ligne de déformation entre une partie de la glace et une autre partie de la glace, de manière que, sous l'effet d'un choc, la glace puisse se déformer par déplacement relatif de l'une partie par rapport à l'autre partie par flexion.

On a donc proposé, dans le FR-A-2789028, un boîtier pour un projecteur qui est conçu pour éviter la destruction d'éléments situés derrière le projecteur, même dans le cas où le projecteur subit un choc important. Le boîtier est constitué d'au moins deux parties pouvant s'encastrer l'une dans l'autre et reliées par une zone ou ligne de rupture. Lorsqu'une force de compression importante est appliquée sur le boîtier, celui-ci peut se déplacer par rapport à la carrosserie du véhicule jusqu'à ce qu'il vienne en appui sur un support fixe. Cet appui provoque la rupture de chaque zone ou ligne de rupture et l'encastrement des parties constitutives du boîtier les unes dans les autres, ce qui permet de protéger les éléments situés à l'arrière du boîtier.

Ce type de boîtier n'est pas applicable aux projecteurs de style très enveloppant équipant les véhicules de conception récente, car alors, la glace du projecteur recouvre le boîtier jusque dans sa partie arrière, ce qui ne permet plus de prévoir des parties de boîtier encastrables les unes dans les autres, par exemple de forme tronconique.

Le but de l'invention est donc de proposer un projecteur pour véhicule automobile destiné à être placé dans une zone du véhicule exposée aux chocs et comportant un boîtier fixé sur une partie de carrosserie du véhicule automobile et une glace solidaire du boîtier, ce projecteur permettant de limiter au maximum la destruction, en cas de choc, d'éléments du véhicule situés à l'arrière du boîtier et de la glace fermant le boîtier, en particulier dans le cas où le projecteur est un projecteur enveloppant.

Dans ce but, le boîtier comporte au moins une ligne de rupture entre une première partie du boîtier fixée sur la carrosserie et une seconde partie du boîtier, de manière que, sous l'effet d'un choc, le boîtier puisse se briser suivant la ligne de rupture et se déformer par déplacement de la seconde par rapport à la première partie du boîtier, la glace fixée sur la première et sur la seconde parties du boîtier se déformant alors par flexion.

Afin de bien faire comprendre l'invention, on va décrire à titre d'exemple en se référant aux figures jointes en annexe plusieurs modes de réalisation d'un projecteur suivant l'invention.
La figure 1 est une vue en perspective de la partie avant d'un véhicule automobile comportant des projecteurs de type enveloppant.
Les figures 2A et 2B sont des vues en perspective d'un projecteur suivant l'invention.

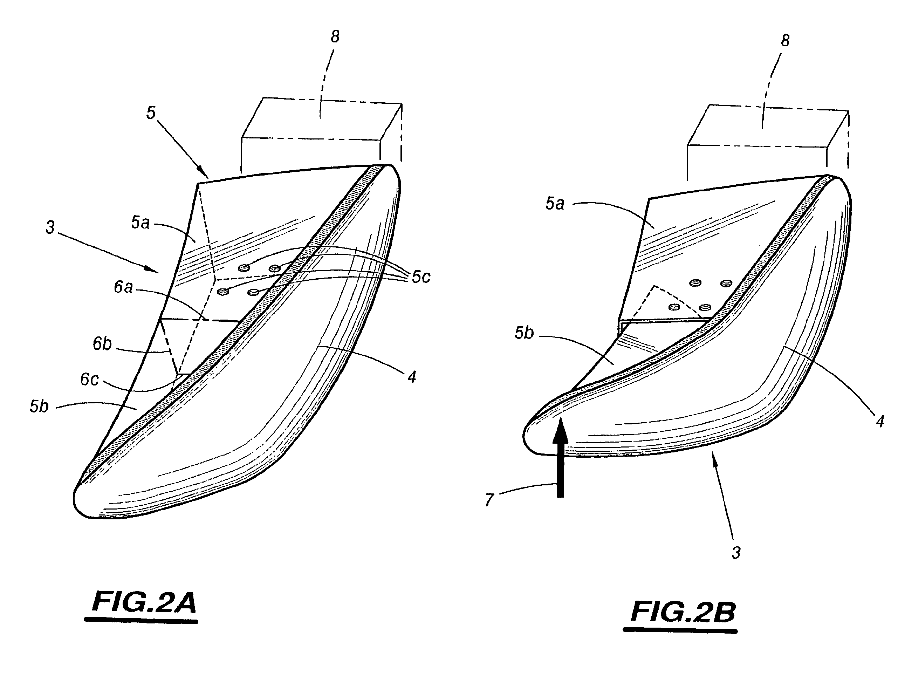

La figure 2A est une vue du projecteur n'ayant pas subi de choc.
La figure 2B est une vue du projecteur après un choc.

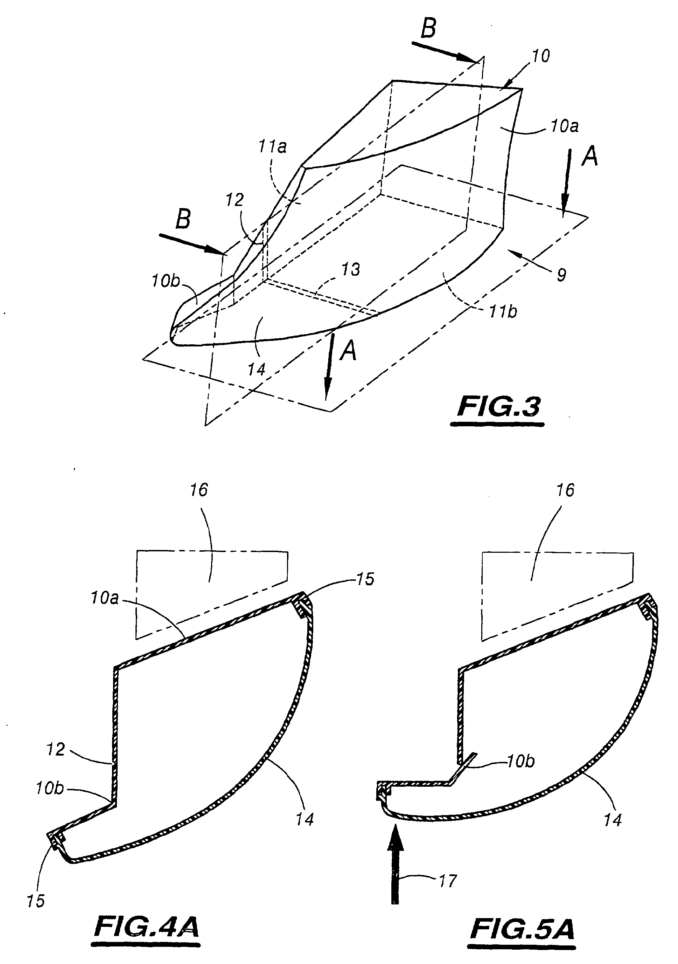

La figure 3 est une vue en perspective d'un projecteur selon l'invention et selon un second mode de réalisation.

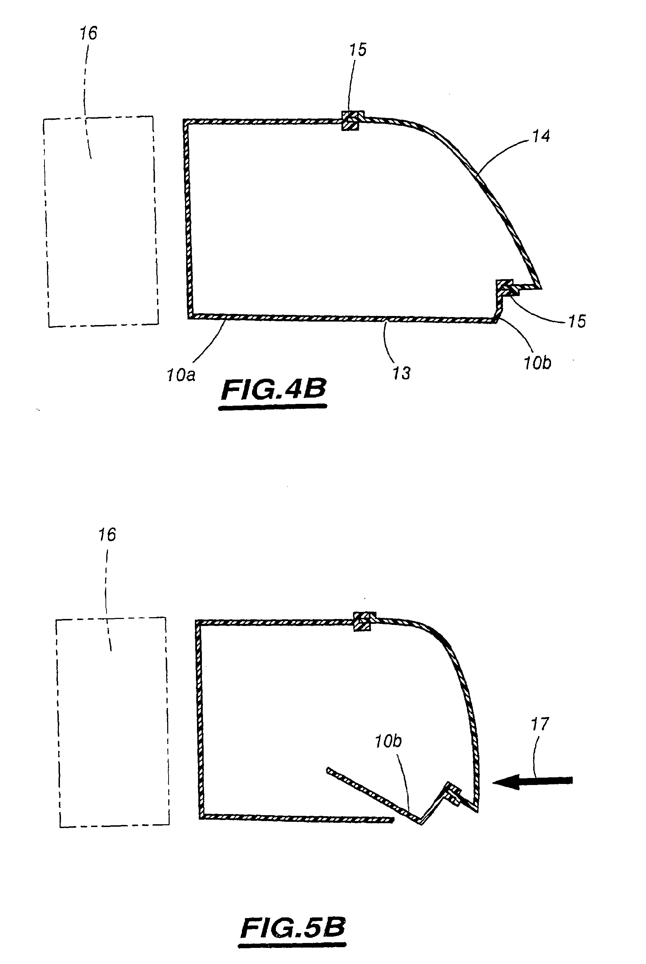

Les figures 4A et 4B et 5A et 5B sont des vues en coupe du projecteur représenté sur la figure 3 suivant les plans de coupe A et B, respectivement.
Les figures 4A et 4B montrent le projecteur n'ayant pas subi de choc.
Les figures 5A et 5B montrent le projecteur ayant subi un choc.

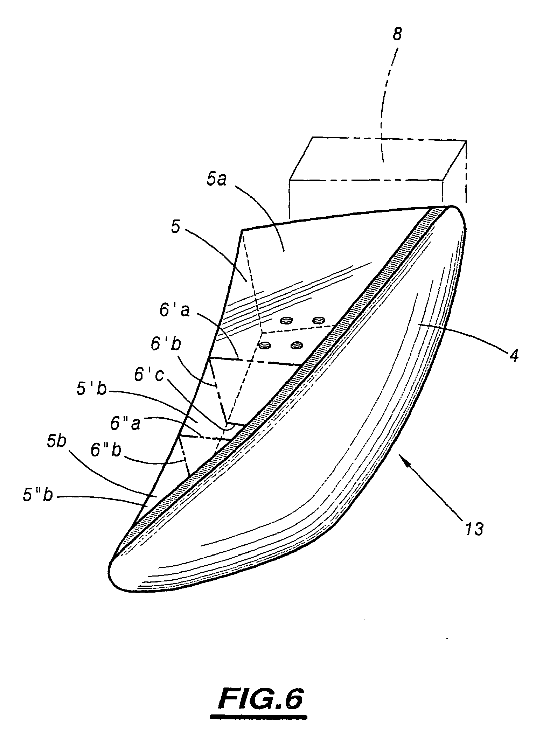

La figure 6 est une vue en perspective d'un projecteur suivant l'invention et suivant un troisième mode de réalisation.

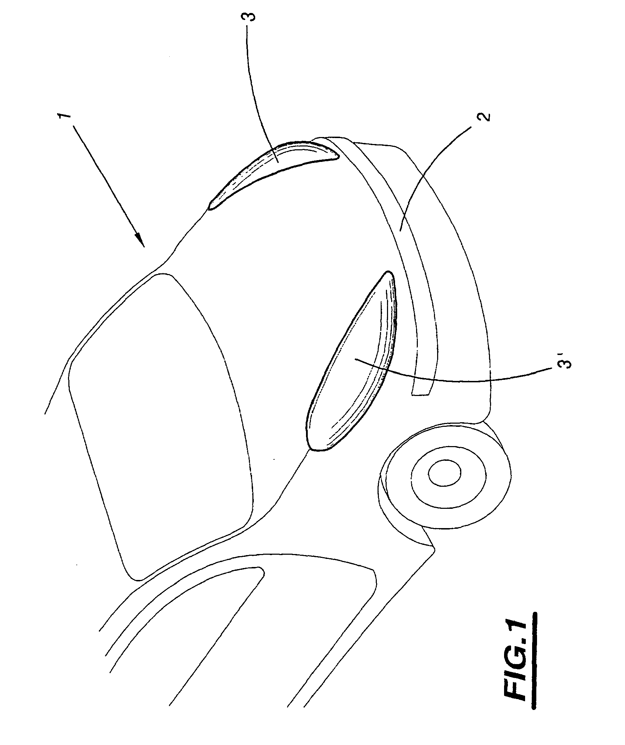

Sur la figure 1, on voit la partie avant d'un véhicule automobile désignée de manière générale par le repère 1.

La partie avant du véhicule comporte en particulier le pare-chocs 2 et au-dessus du pare-chocs, suivant une partie de la carrosserie s'étendant dans la direction longitudinale du véhicule, depuis une zone située au-dessus du pare-chocs, vers l'arrière du véhicule, deux projecteurs 3, 3' de style enveloppant, s'étendant sur une longueur importante suivant la direction longitudinale du véhicule.

Sur la figure 2A, on a représenté de manière schématique un projecteur 3 du véhicule, de type enveloppant qui est réalisé selon l'invention.

Le projecteur comporte essentiellement un boîtier 5 et une glace 4 fixée sur une partie ouverte à l'avant du boîtier 5.

On n'a représenté que le contour du boîtier 5 qui présente la forme générale d'une portion d'un parallélépipède recoupé par la glace 4 de forme allongée et courbe.

Le boîtier 5 comporte trois parois sensiblement planes et sensiblement perpendiculaires deux à deux présentant un bord externe suivant lequel est fixé un bord de la glace 4.

Selon l'invention, les parois du boîtier 5 comportent chacune une ligne de rupture, respectivement 6a, 6b et 6c s'étendant suivant toute la direction transversale de la paroi de boîtier. Les lignes 6a, 6b et 6c sont disposées suivant une même section transversale du boîtier 5, de manière que le contour constitué par les lignes de rupture 6a, 6b et 6c sépare l'une de l'autre une première partie 5a du boîtier ou partie arrière et une seconde partie du boîtier 5b ou partie avant.

Le boîtier renferme le réflecteur, la ou les lampes et les organes électriques du projecteur (non représentés).

Le boîtier 5 est fixé sur la carrosserie du véhicule automobile par l'intermédiaire de sa première partie 5a ou partie arrière, uniquement, à l'aide d'éléments de liaison 5c, par exemple par des vis et/ou des pattes de fixation. Aucun élément de liaison n'assure une fixation directe de la seconde partie 5b ou partie avant du boîtier 5 sur la carrosserie du véhicule.

Le boîtier 5 peut être constitué par des parois en un matériau rigide tel qu'une matière plastique rigide ou un métal. Les lignes de fracture ou de rupture 6a, 6b et 6c sont réalisées par diminution de l'épaisseur de la paroi du boîtier, suivant la ligne de fracture ou encore par tout procédé provoquant une fragilité locale de la paroi du boîtier 5.

Les lignes de fracture peuvent être obtenues pendant l'opération de formage du boîtier ou encore après réalisation de la paroi, par usinage ou par tout autre procédé de fragilisation, par concentration des contraintes.

La glace 4 du projecteur présente une forme allongée d'une direction allant de l'avant vers l'arrière du véhicule, par exemple une forme oblongue et une surface courbe ; la glace est généralement réalisée en une matière plastique translucide ayant une souplesse suffisante pour permettre une flexion de la glace suivant sa direction longitudinale.

Comme représenté sur la figure 2B, dans le cas où le projecteur subit un choc sur sa partie antérieure, une force de compression F, représentée par la flèche 7 sur la figure 2B, s'exerce sur la partie antérieure de la glace 4, cette force de compression étant transmise à la partie antérieure 5b du boîtier 5, et produisant une rupture du boîtier suivant le contour constitué par les lignes de fracture 6a, 6b et 6c. La partie 5b avant du boîtier se déplace par rapport à la partie arrière 5a qui reste totalement fixe par rapport à la carrosserie du véhicule, du fait que les éléments de liaison 5c de cette partie arrière 5a sont des éléments résistants et non des éléments fusibles destinés à se rompre sous un choc. La partie antérieure 5b du boîtier 5 s'encastre à l'intérieur de la partie arrière 5a et la glace 4 subit une flexion dans une zone située sensiblement suivant la section de rupture du boîtier qui est sensiblement plane.

La partie arrière 5a du boîtier ne subit aucun recul ni aucun déplacement en direction des éléments 8 du véhicule automobile situés à l'arrière du projecteur 3, de sorte que ces éléments ne sont pas susceptibles d'être détériorés ou détruits.

A l'issue du choc, la suppression de la force de compression 7 sur la partie d'extrémité de la glace 4 peut se traduire par un retour élastique de la glace 4 à sa forme d'origine, de sorte qu'on peut différer la réparation du projecteur dans le cas où les éléments contenus dans le boîtier n'ont pas été détériorés. L'énergie du choc et la force de compression F ne sont pas transmises intégralement aux éléments de fixation de la partie arrière 5a du boîtier 5, une partie de cette énergie et de la force de compression étant absorbée par la rupture du boîtier suivant les lignes de fracture et la déformation en flexion de la glace 4.

Il est à remarquer que la protection des éléments 8 disposés à l'arrière du projecteur, pour leur éviter toute détérioration ou destruction, peut être obtenue sans prévoir un espace libre à l'arrière du projecteur et à l'avant des éléments 8, la partie arrière du boîtier 5a restant totalement solidaire de la carrosserie du véhicule automobile, après le choc.

Sur la figure 3 et sur les figures 4A et 4B, on a représenté un projecteur 9 selon un second mode de réalisation de l'invention. Le projecteur 9, qui est de type enveloppant, comporte un boîtier 10 ayant globalement la forme d'une portion de parallélépipède prolongée par une partie angulaire courbe, la portion de parallélépipède et la partie angulaire courbe comportant une partie antérieure ouverte suivant laquelle est fixée la glace 14 du projecteur dont la forme enveloppante s'étend sur une longueur importante entre la pointe de la partie angulaire 10b constituant l'extrémité avant du projecteur et une zone du boîtier voisine de son extrémité arrière.

La glace 14 du projecteur 9 est fixée suivant deux bords de direction sensiblement longitudinale de deux parois 11a et 11b du boîtier 10 sensiblement perpendiculaires entre elles, comportant une partie plane dans la partie arrière du boîtier 10a et une partie courbe dans la partie antérieure 10b du boîtier 10.

De manière générale, la glace 14 est fixée aussi bien à la partie arrière 10a qu'à la partie avant 10b du boîtier 10.

Entre la partie arrière 10a et la partie avant du boîtier, les parois sensiblement perpendiculaires sur lesquelles est fixée la glace 14 sont traversées par des lignes de rupture sensiblement rectilignes 12 et 13.

Le boîtier 10 est fixé sur la carrosserie du véhicule, uniquement par l'intermédiaire de sa partie arrière 10a.

Comme il est visible sur les figures 4A et 4B, la glace 14 est fixée suivant ses bords, à l'intérieur de feuillures 15 réalisées suivant les bords des parois du boîtier 10, dans sa partie arrière 10a et dans sa partie avant 10b.

Dans le cas d'un choc sur la partie avant du projecteur, une force de compression 17 représentée sur les figures 5A et 5B s'exerce vers l'arrière sur la partie antérieure de la glace 14 du projecteur. La force de compression est transmise à la partie avant des parois 11a et 11b du boîtier 10 qui subissent une rupture suivant les lignes 12 et 13, de sorte que la partie avant 10b du boîtier 10 se déplace par rapport à la partie arrière qui est fixée de manière rigide et résistante sur la carrosserie du véhicule automobile.

Les parties des parois 11a et 11b du boîtier 10 situées à l'avant des lignes de rupture 12 et 13 se déplacent vers l'intérieur de la partie arrière 10a du boîtier, comme représenté sur les parties 5A et 5B. La glace 14 subit une flexion qui augmente sa courbure dans la direction longitudinale.

Les éléments 16 du véhicule automobile disposés à l'arrière du projecteur 9 ne peuvent subir aucune détérioration ni destruction par recul du boîtier 10 du fait que la partie arrière 10a du boîtier est fixée par des éléments de liaison résistants sur la carrosserie du véhicule. En outre, une partie de l'énergie du choc est absorbée par la rupture du boîtier 10 et la flexion de la glace 14.

Sur la figure 6, on a représenté un troisième mode de réalisation d'un projecteur suivant l'invention désigné de manière générale par le repère 13.

Le projecteur 13 représenté sur la figure 6 présente la forme générale du projecteur 3 représenté sur la figure 1 et sur les figures 2A et 2B.

Les éléments correspondants sur les figures 2A et 2B d'une part et 6 d'autre part sont désignés par les mêmes repères.

En particulier, le projecteur 13 comporte un boîtier 5 ayant une partie arrière 5a qui est fixée sur la carrosserie du véhicule automobile.

La partie avant 5b du boîtier comporte deux zones de rupture constituées chacune de trois lignes de fracture analogues aux lignes de fracture 6a, 6b et 6c du mode de réalisation du boîtier 5 représenté sur la figures 2A et la figure 2B.

La première zone de rupture du boîtier est constituée par les lignes de rupture 6'a, 6'b et 6'c qui séparent la partie arrière 5a de la partie avant 5b du boîtier 5.

La seconde zone de fracture constituée de trois lignes de fracture telles que 6"a et 6"b représentées sur la figure 6 sépare la partie avant 5b du boîtier en deux parties successives 5'b et 5"b, dans une direction longitudinale du boîtier.

Dans le cas d'un choc s'exerçant sur la partie avant de la glace 4, la partie avant 5b du boîtier 5 subit une rupture au niveau de la première zone de rupture et au niveau de la seconde zone de rupture, de manière que la partie 5'b se déplace par rapport à la partie arrière 5a du boîtier et s'encastre dans la partie arrière 5a et que la partie 5"b se déplace par rapport à la partie 5'b et s'encastre dans cette partie 5'b. On obtient ainsi une plus grande amplitude de déformation du boîtier et donc une plus grande latitude de déformation de la glace 4 par flexion, sans que le boîtier ne limite la déformation en flexion de la glace.

Comme dans le cas des modes de réalisation précédents, la partie arrière 5a du boîtier 5, qui est fixée par des éléments de fixation non fusibles sur la carrosserie du véhicule automobile reste parfaitement en place, de sorte que les éléments 8 du véhicule automobile situés à l'arrière du projecteur ne peuvent être détériorés ou détruits.

Quelles que soient sa forme et la forme correspondante de la glace, le boîtier 5 du projecteur peut être réalisé par moulage d'une matière plastique de manière à obtenir des parois dans lesquelles on crée des zones d'affaiblissement ou de rupture par concentration de contraintes, par exemple des lignes d'affaiblissement suivant lesquelles l'épaisseur des parois du boîtier est réduite.

Le projecteur suivant l'invention présente donc l'avantage d'éviter tout risque de détérioration ou de destruction d'éléments du véhicule situés à l'arrière du projecteur. Du fait qu'il n'est pas nécessaire de prévoir un espace libre à l'arrière du projecteur, on obtient une meilleure utilisation de l'espace du véhicule situé dans cette zone.

Le projecteur suivant l'invention permet aussi de limiter la détérioration ou la destruction des éléments du projecteur situés à l'intérieur du boîtier et de la glace fermant la partie antérieure du projecteur.

L'invention peut être appliquée de manière particulièrement avantageuse dans le cas de projecteurs enveloppants dont la glace présente une forme oblongue, par exemple sensiblement elliptique. L'invention s'applique également à d'autres types de projecteurs et même à des projecteurs qui ne sont pas de type enveloppant.

Les projecteurs auxquels s'applique l'invention peuvent être équipés de lampes réalisant aussi bien des fonctions de signalisation que d'éclairage. Ces projecteurs peuvent être disposés par exemple sur ou au-dessus d'un pare-chocs avant ou arrière d'un véhicule automobile ou encore dans toute autre zone d'un véhicule automobile exposée aux chocs.

L'invention s'applique à de nombreux types de véhicule automobile.

## Revendications

1. Projecteur pour véhicule automobile destiné à être placé dans une zone du véhicule exposée aux chocs et comportant un boîtier (5) fixé sur une partie de carrosserie du véhicule automobile et une glace (4) solidaire du boîtier (5), **caractérisé par le fait que** le boîtier (5) comporte au moins une ligne de rupture (6a, 6b, 6c) entre au moins une première partie (5a) du boîtier fixée sur la carrosserie du véhicule et au moins une seconde partie (5b, 5'b, 5"b) du boîtier (5), de manière que, sous l'effet d'un choc, le boîtier puisse se briser suivant la ligne de rupture (6a, 6b, 6c) et se déformer par déplacement relatif de la seconde partie (5b, 5'b, 5"b) par rapport à la première partie (5a) du boîtier (5), la glace (4) fixée sur la première et sur la seconde parties du boîtier (5) se déformant alors par flexion.

2. - Projecteur suivant la revendication 1, **caractérisé par le fait que** la première partie (5a) du boîtier (5) est fixée sur la carrosserie du véhicule automobile par des éléments de fixation (5c) de type non fusible susceptible de résister à un choc subi par le projecteur (3).

3. Projecteur suivant l'une quelconque des revendications 1 et 2, **caractérisé par le fait que** le boîtier (5) présente la forme générale d'une portion de parallélépipède limitée par la glace (4) ayant un contour de forme oblongue et une surface courbe, la première partie (5a) ou partie arrière du boîtier (5) du projecteur étant séparée de la seconde partie du boîtier (5b) ou partie avant de forme angulaire par une zone de rupture comportant trois lignes de rupture (6a, 6b, 6c) disposées chacune suivant une paroi du boîtier (5) les parois du boîtier (5) étant sensiblement perpendiculaires deux à deux.

4. Projecteur suivant l'une quelconque des revendications 1 et 2, **caractérisé par le fait que** le boîtier (10) du projecteur (9) comporte une première partie arrière (10a) ayant sensiblement la forme d'une portion de parallélépipède limitée par la glace (14) et une seconde partie avant (10b) ayant une forme angulaire courbe se terminant par une pointe, la partie arrière (10a) et la partie avant (10b) du boîtier (10) étant séparées par une zone de rupture constituée de deux lignes de rupture (12, 13) ménagée suivant deux parois (11a, 11b) du boîtier (10) sensiblement perpendiculaires entre elles.

5. - Projecteur suivant l'une quelconque des revendications 1 et 2, **caractérisé par le fait que** le boîtier (5) comporte une première et au moins une seconde zones de rupture (6'a, 6'b, 6'c, 6"a, 6"b) placées successivement suivant la longueur du boîtier (5), la première zone de rupture constituée de lignes de rupture (6'a, 6'b, 6'c) séparant la première partie (5a) du boîtier, ou partie arrière, de la seconde partie (5b), ou partie avant du boîtier (5), et la seconde zone de rupture constituée de lignes de ruptures (6"a, 6"b) séparant la première partie avant (5b) du boîtier en une première et au moins une seconde parties (5'b, 5"b) disposées successivement dans la direction longitudinale du boîtier (5).

6. - Projecteur suivant l'une quelconque des revendications 1 à 5, **caractérisé par le fait que** le boîtier (5) est réalisé par moulage d'une matière plastique.

7. - Projecteur suivant l'une quelconque des revendications 1 à 6, **caractérisé par le fait que** la glace (4, 14) est réalisée en une matière plastique souple translucide.

## Claims

1. Motor vehicle lamp intended to be placed in an area of the vehicle exposed to impacts and comprising a housing (5) fixed to part of the bodywork of the motor vehicle and a lens (4) attached to the housing (5), **characterised by** the fact that the housing (5) comprises at least one breakage line (6a, 6b, 6c) between at least one first part (5a) of the housing fixed to the bodywork of the vehicle and at least one second part (5b, 5'b, 5"b) of the housing (5), so that, under the effect of an impact, the housing can break along the breakage line (6a, 6b, 6c) and deform by relative movement of the second part (5b, 5'b, 5"b) with respect to the first part (5a) of the housing (5), the lens (4) fixed to the first and second parts of the housing (5) then deforming by bending.

2. Lamp according to Claim 1, **characterised by** the fact that the first part (5a) of the housing (5) is fixed to the bodywork of the motor vehicle by fixing elements (5c) of the non-breakaway type capable of withstanding an impact suffered by the lamp (3).

3. Lamp according to either one of Claims 1 and 2, **characterised by** the fact that the housing (5) has the general shape of a parallelepiped portion limited by the lens (4) having an oblong-shaped outline and a curved surface, the first part (5a) or rear part of the housing (5) of the lamp being separated from the second part of the housing (5b) or angular-shaped front part by a breakage area comprising three breakage lines (6a, 6b, 6c) each disposed along a wall of the housing (5), the walls of the housing (5) being substantially perpendicular in pairs.

4. Lamp according to either one of Claims 1 and 2, **characterised by** the fact that the housing (10) of the lamp (9) comprises a first rear part (10a) having substantially the shape of a parallelepiped portion limited by the lens (14) and a second front part (10b) having a curved angular shape ending in a point, the rear part (10a) and the front part (10b) of the housing (10) being separated by a breakage area consisting of two breakage lines (12, 13) made along two walls (11a, 11b) of the housing (10) substantially perpendicular to each other.

5. Lamp according to either one of Claims 1 and 2, **characterised by** the fact that the housing (5) comprises a first and at least one second breakage area (6'a, 6'b, 6'c, 6"a, 6"b) placed successively along the length of the housing (5), the first breakage area consisting of breakage lines (6'a, 6'b, 6'c) separating the first part (5a) of the housing, or rear part, from the second part (5b), or front part of the housing (5), and the second breakage area consisting of breakage lines (6"a, 6"b) separating the first front part (5b) of the housing into a first and at least one second part (5'b, 5"b) disposed successively in the longitudinal direction of the housing (5).

6. Lamp according to any one of Claims 1 to 5, **characterised by** the fact that the housing (5) is produced by moulding a plastic material.

7. Lamp according to any one of Claims 1 to 6, **characterised by** the fact that the lens (4, 14) is produced from a translucent flexible plastic material.

## Patentansprüche

1. Kraftfahrzeugscheinwerter, der dazu bestimmt ist, in einer Zone des Fahrzeugs, die Stößen ausgesetzt ist, angeordnet zu werden, mit einem an einem Teil der Kraftfahrzeugkarosserie befestigten Gehäuse (5) und einer mit dem Gehäuse (5) fest verbundenen Scheibe (4), **dadurch gekennzeichnet, dass** das Gehäuse (5) wenigstens! eine Bruchlinie (6a, 6b, 6c) zwischen wenigstens einem ersten Teil (5a) des Gehäuses, der an der Fahrzeugkarosserie befestigt ist, und wenigstens einem zweiten Teil (5b, 5'b, 5"b) des Gehäuses (5) auf weist, derart, dass das Gehäuse unter der Wirkung eines Stoßes längs der Bruchlinie (6a, 6b, 6c) zerbrechen kann und sich durch relative Verlagerung des zweiten Teils (5b, 5'b, 5"b) in Bezug auf den ersten Teil (5a) des Gehäuses (5) verformen kann, wobei sich dann die an dem ersten und an dem zweiten Teil des Gehäuses (5) befestigte Scheibe (4) durch Biegen verformt.

2. Scheinwerfer nach Anspruch 1, **dadurch gekennzeichnet, dass** der erste Teil (5a) des Gehäuses (5) an der Karosserie des Kraftfahrzeugs durch Befestigungselemente (5c) des nicht schmelzbaren Typs befestigt ist, die einem Stoß, den der Scheinwerfer (3) erleidet, widerstehen können.

3. Scheinwerfer nach einem der Ansprüche 1 und 2, **dadurch gekennzeichnet, dass** das Gehäuse (5) die allgemeine Form eines Parallelepiped-Abschnitts aufweist, der durch die Scheibe (4) begrenzt ist und einen Umriss mit länglicher Form und eine gekrümmte Oberfläche besitzt, wobei der erste Teil (5a) oder hintere Teil des Gehäuses (5) des Scheinwerfers von dem zweiten Teil des Gehäuses (5b) oder vorderen Teil mit eckiger Form durch eine Bruchzone getrennt ist, die drei Bruchlinien (6a, 6b, 6c) aufweist, die jeweils längs einer Wand des Gehäuses (5) angeordnet sind, wobei die Wände des Gehäuses (5) paarweise im Wesentlichen zueinander senkrecht sind.

4. Scheinwerfer nach einem der Ansprüche 1 und 2, **dadurch gekennzeichnet, dass** das Gehäuse (10) des Scheinwerfers (9) einen ersten hinteren Teil (10a), der im Wesentlichen die Form eines Parallelepiped-Abschnitts hat, der durch die Scheibe (14) begrenzt ist, und einen zweiten vorderen Teil (10b), der eine gekrümmte eckige Form hat und in einer Spitze endet, aufweist, wobei der hintere Teil (10a) und der vordere Teil (10b) des Gehäuses (10) durch eine Bruchzone getrennt sind, die aus zwei Bruchlinien (12, 13) gebildet ist, die längs zweier Wände (11a, 11b) des Gehäuses (10), die im Wesentlichen zueinander senkrecht sind, ausgebildet sind.

5. Scheinwerfer nach einem der Ansprüche 1 und 2, **dadurch gekennzeichnet, dass** das Gehäuse (5) eine erste und wenigstens eine zweite Bruchzone (6'a, 6'b, 6'c, 6"a, 6"b) aufweist, die nacheinander in Richtung der Länge des Gehäuses (5) angeordnet sind, wobei die erste Bruchzone aus Bruchlinien (6'a, 6'b, 6'c) gebildet ist, die den ersten Teil (5a) des Gehäuses oder hinteren Teil von dem zweiten Teil (5b) oder vorderen Teil des Gehäuses (5) trennen, und die zweite Bruchzone durch Bruchlinien (6"a, 6"b) gebildet ist, die den ersten vorderen Teil (5b) des Gehäuses in einen ersten und wenigstens einen zweiten Teil (5'b, 5"b) trennen, die nacheinander in Längsrichtung des Gehäuses (5) angeordnet sind.

6. Scheinwerfer nach einem der Ansprüche 1 bis 5, **dadurch gekennzeichnet, dass** das Gehäuse (5) durch Gießen eines Kunststoffs verwirklicht ist.

7. Scheinwerfer nach einem der Ansprüche 1 bis 6, **dadurch gekennzeichnet, dass** die Scheibe (4, 14) aus einem klaren, weichen Kunststoff verwirklicht ist.
